# EUROPEAN PATENT APPLICATION

(11) **EP 0 867 265 A1**
(43) Date of publication of application: **30.09.1998**
(21) Application number: 97500055.5
(22) Date of filing: 20.03.1997
(51) Int. Cl.: B29B 7/86, B29B 7/74, B29C 44/34

(54) **Apparatus for mixing raw materials under controlled pressure for producing polyurethane foams and the like**

(71) Applicant: FABRICAS LUCIA ANTONIO BETERE S.A. (FLABESA), E-28043 Madrid (ES)
(72) Inventor: Del Carpio Conde, Bernardo Miguel Angel, 28220 Majadahonda, Madrid (ES)
(74) Representative: Carpintero Lopez, Francisco

(57) **Abstract**

The improvements lie in carrying out the classic violent stirring of the raw materials at issue, namely for instance isocyanate and a premixture of polyols and other additives, under controlled pressure conditions, whether under an above-atmospheric pressure or a below-atmospheric pressure, preferably under vacuum conditions, in which case, and due to these vacuum conditions, trapping of bubbles within the foamed mixture is eliminated or minimised, thereby preventing the classic formation of alveoli within the foam obtained, which improves its quality and renders foaming uniform. The invention is further focused on the formation of the premixture of polyol and additives under controlled pressure conditions in order to prevent said premixture, upon being added, from trapping air bubbles into the final mixture, and, finally, the invention is focused on placing the raw materials involved in the process under controlled pressure conditions in order to complete the controlled pressure component supply and mixture cycle.

## Description

### OBJECT OF THE INVENTION

The present invention relates to improvements introduced in mixing systems for the raw materials used for polyurethane foams and other like products, during the foam manufacturing process.

The object of the invention is to successfully improve the quality of foams of this kind by almost entirely doing away with the classic air bubbles generated within the foams at the component mixing phase, and to carry out the process of mixing and supplying the products involved under controlled pressure conditions, thereby to yield great benefits as compared with traditionally used techniques.

### BACKGROUND OF THE INVENTION

With reference specifically to the obtention of polyurethane foams, it is well-known that there is a preliminary phase in which polyol and a number of additives including, for instance, amines, octoates, silicones, retardants, inter alia, are mixed, which premixture is then in turn added to the other foam component, namely isocyanate, which mixture causes an almost immediate reaction of the components that results in the formation of the polyurethane foam. Now, obviously, in order for this reaction to be carried out under optimal conditions, the mixture of the isocyanate, on the one hand, and the polyol plus the additives, on the other, must be as homogeneous as possible, and it is therefore necessary to have the mixture stirred violently and quickly.

There are known devices for working this process, for instance as disclosed in Spanish utility model 255,357, with which a mixing effect is achieved, but with which the more violent stirring is, which is naturally desirable for an enhanced homogeneity, the greater the inclusion in the mixture of air in the form of bubbles will be. Now, therefore, a large quantity of air has access to the foamed mixture, which will result in the foams obtained having manifold alveoli in their interior, which adversely affect both the quality and characteristics of the foam.

There are also known processes to have the polyurethane foam grow under a controlled atmosphere, which variable successfully speeds up or delays the growth process, thereby for foams of varying hardness to be obtained. These controlled atmosphere growth processes must be rapidly commenced, for the mixture of components such as isocyanate and the premixture begins to react quickly, indeed even before the ideal pressure is established within the controlled atmosphere chamber where growth begins.

This process followed by controlled atmosphere foaming is a noncontinuous growth process. The present invention has been devised in an attempt at overcoming these shortfalls, and makes provision for the contribution of a foaming mixture in which the start of the reaction may be delayed, thereby allowing the controlled atmosphere growth chamber to be at the ideal pressure calculated for foaming or at magnitudes very close thereto.

### DESCRIPTION OF THE INVENTION

Starting from conventional raw material mixing systems, i.e. violent stirring mixing systems, the improvements disclosed in the invention fully overcome the shortfalls described hereinabove, doing away with the trapping of air and bubble formation and consequently with the formation of alveoli within the foam, derived from such bubbles.

More specifically, said improvements lie in carrying out the classic violent stirring phase under special pressure conditions, in particular at a below-atmospheric pressure and preferable applying a vacuum, which contributes a twofold advantage, namely on the one hand the absence of air due to the vacuum, which prevents air from being trapped, and further on the other hand these depression conditions delay the chemical reaction between the isocyanate and the polyol plus the additives, which in turn allows said chemical reaction to be carried out after an enhanced homogenisation of the raw materials included in the mixture.

This mixture of the components involved under depressed or vacuum conditions is possible for both the mixture of the components that will form the so-called premixture, and the subsequent addition of the premixture to the isocyanate, thereby preventing that any mixing phase may have a repercussion on the physical conditions of the resulting mixture.

Now, therefore, having placed the products within the vessel in which the stirring means are arranged, the vessel is shut, a vacuum is applied thereto or a controlled pressure is established in the vessel, the components of the mixture then undergo the mixing phase, the vessel is taken back to atmospheric pressure if such is appropriate, and its contents are finally poured onto the relevant foaming tray.

Since the mixture of components, to form both the premixture and the foaming mixture, takes place under a controlled atmospheric pressure, the latter phase can be adjusted, adjusting the growth speed of the mixture that has already been obtained. It should in this sense be noted that a negative pressure may result in a delayed start of the reaction, whereas a positive or above-atmospheric pressure may speed up the reaction process, whichever is advisable depending on whether the process needs to be delayed or sped up.

The object of the invention is also to ensure that the raw materials supplied to form the premixture or the actual polyol that is added to the premixture, are under controlled pressure conditions, whether they are positive or negative pressures, even though one of the advantages of the invention lies in subjecting the mixing chambers to a vacuum.

By placing these reservoirs containing the raw materials involved in the process under controlled pressure conditions, the valves and pumps supplying the components to the mixture will be prevented from working under unfavourable component supply conditions, which unfavourable conditions would affect the ultimate duration of the components since there would be a marked pressure difference between the reservoir supplying the raw materials and the inside of the mixing reservoir, whether positive, i.e. above-atmospheric, pressures, or negative below-atmospheric pressures are used. That is to say, the differential pressure in the propelling or metering pumps is kept under control, i.e. under a control established beforehand by the installation designer.

This pressure control in the reservoirs containing the raw materials ends the maintenance cycle of the mixing process for producing polyurethane foams and the like, the foregoing organised into the various phases under controlled pressure conditions.

### PREFERRED EMBODIMENT OF THE INVENTION

In accordance with a preferred practical embodiment of the invention, two independent chambers are used, namely a mixing chamber and a vacuum chamber, the first mixing chamber being fitted with mixing means for the mixture comprising the isocyanate plus the premixture based on polyols and additives, both chambers being duly interconnected through a duct fitted with a two-way valve, so that the mixing chamber may be connected to the vacuum chamber through this two-way valve in due course and the atmospheric pressure may be restored in said mixing chamber at the appropriate time, i.e. when the mixing phase is over and right before the mixture contained in said mixing chamber is poured onto the foaming tray.

Now, obviously, the results obtained will depend on the level of vacuum applied, and therefore the closer said level is to a total vacuum, the better the standard of quality of the foam obtained will be, for there will be a lesser number and size of the potential alveoli existing within the foam, naturally at the expense of a greater processing cost, for the power consumed to generate such a vacuum will be proportional to the level of vacuum obtained.

The advantage of the mixture obtained being homogeneous and not influenced by potential air bubbles contained within the same, will be a uniform foaming and the fact that the mixture may undergo a foaming process.

Furthermore, the said process can be carried out under negative or positive pressure conditions, which would yield experimental results by mixing foaming components under controlled pressure conditions.

Finally, the process would be completed at the starting phase by keeping the raw material containing tanks or reservoirs under controlled pressure conditions, thereby preventing the valves and pumps supplying such components to the premixture or final mixing chamber from having to work under extreme conditions, since excessive pressure differences are observed between the supply vessels in the event of a vacuum that are by no means beneficial for such elements of the installation, and which would distort the flow.

## Claims

1. Improvements introduced in raw material mixing systems for producing polyurethane foams and the like, in which after a preliminary premixing phase of the polyol and its additives, a definitive mixture is made with isocyanate, by means of a violent stirring, right before the mixture is poured onto the appropriate foaming tray, characterised in that said mixture of the isocyanate, on the one hand, and the polyol and its additives, on the other, is carried out under controlled pressure conditions.

2. Improvements introduced in raw material mixing systems for producing polyurethane foams and the like, as in claim 1, characterised in that the mixture of isocyanate and the premixture formed by the polyol and its additives is carried out under below-atmospheric pressure, preferably under vacuum conditions, and thus the absence or minimal air present in the mixing chamber, minimises or does away with bubble formation upon air being trapped during the violent stirring of the mixture.

3. Improvements introduced in raw material mixing systems for producing polyurethane foams and the like, as in claims 1 and 2, characterised in that after the raw materials are placed within the mixing chamber and this chamber is shut, the chamber is connected to a source of vacuum and the mixture is then immediately stirred, after which the connection to the source of vacuum is cut off and the mixture is, once again at atmospheric pressure, poured onto the appropriate foaming tray.

4. Improvements introduced in raw material mixing systems for producing polyurethane foams and the like, as in claims 1 to 3, characterised in that the formation of the premixture of the polyol and its additives is also carried out under controlled pressure conditions, preferably under vacuum conditions, preventing air bubbles from being introduced within the premixture during stirring.

5. Improvements introduced in raw material mixing systems for producing polyurethane foams and the like, as in claims 1 to 4, characterised in that the reservoirs storing and supplying the raw materials involved in the process, whether the isocyanate or the polyol containing reservoirs, or the additive containing reservoir, are kept under controlled pressure conditions, preferably under vacuum conditions, thereby to achieve a controlled imbalance with reference to the difference in pressure that is less in the mixing chamber than in the storage tanks, thereby allowing the differential pressure on the pumps to be controlled, and moreover being a further step towards eliminating bubble formation in the raw materials.

6. Improvements introduced in raw material mixing systems for producing polyurethane foams and the like, as in claims 1 to 4, characterised in that the entire polyurethane foam growth process is carried out under equal or different controlled pressure conditions at each phase of said process, depending on whether the process is to be influenced in one sense or another.
